# EUROPEAN PATENT APPLICATION

(11) **EP 4 601 243 A1**
(43) Date of publication of application: **13.08.2025**
(21) Application number: 25156129.6
(22) Date of filing: 06.02.2025
(51) Int. Cl.: H04L 9/32, H04L 9/00

(54) **AUTOMATIC SIGNING OF BLOCKCHAIN TRANSACTIONS**

(30) Priority: 12.02.2024 FI 20245141
(71) Applicant: Nokia Solutions and Networks Oy, 02610 Espoo (FI)
(72) Inventor: DELÈGUE, Gérard, Bourg-la-Reine (FR); CHAPELET, Ludovic Florent Eric, Lyon (FR); LEGAT, Bruno, Evry-Courcouronnes (FR)
(74) Representative: Nokia EPO representatives

(57) **Abstract**

A user device is disclosed. The user device comprises means for storing at least one private key of a user of the user device and predefined auto-signing rules; receiving a blockchain transaction; decoding the blockchain transaction according to a blockchain transaction model to extract attributes of the blockchain transaction; submitting the decoded blockchain transaction to an auto-signing rules engine; evaluating the blockchain transaction by the auto-signing rules engine based on the auto-signing rules by comparing the attributes of the blockchain transaction and conditions of the auto-signing rules; and automatically deciding based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction.

## Description

### TECHNICAL FIELD

Various example embodiments relate to blockchain technology and automatic signing of blockchain transactions.

### BACKGROUND

This section illustrates useful background information without admission of any technique described herein representative of the state of the art.

Blockchain technology operates on the premise of distributed ledgers, which are decentralized databases that store data across multiple nodes or computers. The fundamental unit of data in a blockchain is a digitally signed transaction. A transaction may represent the exchange or alteration of assets, information, or ownership rights, for example. Present disclosure provides some solutions related to automatic signing of blockchain transactions.

### SUMMARY

The scope of protection sought for various embodiments of present disclosure is set out by the independent claims. The embodiments and features, if any, described in this specification that do not fall under the scope of the independent claims are to be interpreted as examples useful for understanding various example embodiments.

According to a first example aspect of the present disclosure, there is provided a user device comprising:
means for storing at least one private key of a user of the user device and predefined auto-signing rules, wherein the auto-signing rules define one or more conditions and a corresponding action;
means for receiving a blockchain transaction;
means for decoding the blockchain transaction according to a blockchain transaction model to extract attributes of the blockchain transaction;
means for submitting the decoded blockchain transaction to an auto-signing rules engine;
means for evaluating the blockchain transaction by the auto-signing rules engine based on the auto-signing rules by comparing the attributes of the blockchain transaction and the conditions of the auto-signing rules; and
means for automatically deciding based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction.

In some example embodiments of the first aspect, the user device comprises two or more blockchain transaction models.

In some example embodiments of the first aspect, the user device further comprises means for sequentially trying to decode the received blockchain transaction using the two or more blockchain transaction models.

In some example embodiments of the first aspect, the auto-signing rules are associated with a respective blockchain transaction model.

In some example embodiments of the first aspect, the user device further comprises means for ignoring the received blockchain transaction responsive to a failure to decode the blockchain transaction.

In some example embodiments of the first aspect, the user device further comprises means for automatically building a proposal for a new auto-signing rule based on attributes of the received blockchain transaction; and means for requesting user approval for the new auto-signing rule.

In some example embodiments of the first aspect, the proposal for a new auto-signing rule is built responsive to detecting that comparing attributes of the blockchain transaction and the conditions of the auto-signing rules results in a failure to find a matching auto-signing rule.

In some example embodiments of the first aspect, the user device further comprises means for allowing the user of the user device to review and edit the auto-signing rules.

In some example embodiments of the first aspect, the user device further comprises means for exporting auto-signing rules from the user device for use in other devices.

In some example embodiments of the first aspect, the user device further comprises means for importing auto-signing rules to the user device.

In some example embodiments of the first aspect, the user device further comprises means for logging auto-signing actions performed by the auto-signing rules engine.

In some example embodiments of the first aspect, the conditions comprise a domain where the blockchain transaction comes from.

In some example embodiments of the first aspect, the conditions comprise one or more of the following: type of the blockchain transaction, name of the smart contract, function of the smart contract, version of the smart contract, blockchain transaction category, smart contract title.

In some example embodiments of the first aspect, the user device is one of the following: a smart phone, a pad, a laptop, a personal computing device.

According to a second example aspect of the present disclosure, there is provided a user device comprising
at least one processor; and
at least one memory including executable instructions that, when executed by the at least one processor, cause the user device
   to store at least one private key of a user of the user device and predefined auto-signing rules, wherein the auto-signing rules define one or more conditions and a corresponding action;
   to receive a blockchain transaction;
   to decode the blockchain transaction according to a blockchain transaction model to extract attributes of the blockchain transaction;
   to submit the decoded blockchain transaction to an auto-signing rules engine;
means for evaluating the blockchain transaction by the auto-signing rules engine based on the auto-signing rules by comparing the attributes of the blockchain transaction and the conditions of the auto-signing rules; and
   to automatically decide based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction.

In some example embodiments of the second aspect, the user device comprises two or more blockchain transaction models.

In some example embodiments of the second aspect, the instructions further cause the user device to sequentially try to decode the received blockchain transaction using the two or more blockchain transaction models.

In some example embodiments of the second aspect, the auto-signing rules are associated with a respective blockchain transaction model.

In some example embodiments of the second aspect the instructions further cause the user device to ignore the received blockchain transaction responsive to a failure to decode the blockchain transaction.

In some example embodiments of the second aspect, the instructions further cause the user device to automatically build a proposal for a new auto-signing rule based on attributes of the received blockchain transaction; and to request user approval for the new auto-signing rule.

In some example embodiments of the second aspect, the proposal for a new auto-signing rule is built responsive to detecting that comparing attributes of the blockchain transaction and the conditions of the auto-signing rules results in a failure to find a matching auto-signing rule.

In some example embodiments of the second aspect, the instructions further cause the user device to allow the user of the user device to review and edit the auto-signing rules.

In some example embodiments of the second aspect, the instructions further cause the user device to export auto-signing rules from the user device for use in other devices.

In some example embodiments of the second aspect, the instructions further cause the user device to import auto-signing rules to the user device.

In some example embodiments of the second aspect, the instructions further cause the user device to log auto-signing actions performed by the auto-signing rules engine.

In some example embodiments of the second aspect, the conditions comprise a domain where the blockchain transaction comes from.

In some example embodiments of the second aspect, the conditions comprise one or more of the following: type of the blockchain transaction, name of the smart contract, function of the smart contract, version of the smart contract, blockchain transaction category, smart contract title.

In some example embodiments of the second aspect, the user device is one of the following: a smart phone, a pad, a laptop, a personal computing device.

According to a third example aspect of the present disclosure, there is provided a method, comprising:
storing at least one private key of a user of the user device and predefined auto-signing rules, wherein the auto-signing rules define one or more conditions and a corresponding action;
receiving a blockchain transaction;
decoding the blockchain transaction according to a blockchain transaction model to extract attributes of the blockchain transaction;
submitting the decoded blockchain transaction to an auto-signing rules engine;
evaluating the blockchain transaction by an auto-signing rules engine based on the auto-signing rules by comparing the attributes of the blockchain transaction and the conditions of the auto-signing rules; and
automatically deciding based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction.

In some example embodiments of the third aspect, the user device comprises two or more blockchain transaction models.

In some example embodiments of the third aspect, the method further comprises sequentially trying to decode the received blockchain transaction using the two or more blockchain transaction models.

In some example embodiments of the third aspect, the auto-signing rules are associated with a respective blockchain transaction model.

In some example embodiments of the third aspect, the method further comprises ignoring the received blockchain transaction responsive to a failure to decode the blockchain transaction.

In some example embodiments of the third aspect, the method further comprises automatically building a proposal for a new auto-signing rule based on attributes of the received blockchain transaction; and requesting user approval for the new auto-signing rule.

In some example embodiments of the third aspect, the proposal for a new auto-signing rule is built responsive to detecting that comparing attributes of the blockchain transaction and the conditions of the auto-signing rules results in a failure to find a matching auto-signing rule.

In some example embodiments of the third aspect, the method further comprises allowing the user of the user device to review and edit the auto-signing rules.

In some example embodiments of the third aspect, the method further comprises exporting auto-signing rules from the user device for use in other devices.

In some example embodiments of the third aspect, the method further comprises importing auto-signing rules to the user device.

In some example embodiments of the third aspect, the method further comprises logging auto-signing actions performed by the auto-signing rules engine.

In some example embodiments of the third aspect, the conditions comprise a domain where the blockchain transaction comes from.

In some example embodiments of the third aspect, the conditions comprise one or more of the following: type of the blockchain transaction, name of the smart contract, function of the smart contract, version of the smart contract, blockchain transaction category, smart contract title.

In some example embodiments of the third aspect, the user device is one of the following: a smart phone, a pad, a laptop, a personal computing device.

According to a fourth example aspect of the present disclosure, there is provided a computer program comprising program instructions stored thereon for performing at least the following in a user device:
storing at least one private key of a user of the user device and predefined auto-signing rules, wherein the auto-signing rules define one or more conditions and a corresponding action;
receiving a blockchain transaction;
decoding the blockchain transaction according to a blockchain transaction model to extract attributes of the blockchain transaction;
submitting the decoded blockchain transaction to an auto-signing rules engine; evaluating the blockchain transaction by an auto-signing rules engine based on the auto-signing rules by comparing the attributes of the blockchain transaction and the conditions of the auto-signing rules; and
automatically deciding based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction.

In some example embodiments of the fourth aspect, the user device comprises two or more blockchain transaction models.

In some example embodiments of the fourth aspect, the computer program further comprises instructions for performing sequentially trying to decode the received blockchain transaction using the two or more blockchain transaction models.

In some example embodiments of the fourth aspect, the auto-signing rules are associated with a respective blockchain transaction model.

In some example embodiments of the fourth aspect, the computer program further comprises instructions for performing ignoring the received blockchain transaction responsive to a failure to decode the blockchain transaction.

In some example embodiments of the fourth aspect, the computer program further comprises instructions for performing automatically building a proposal for a new auto-signing rule based on attributes of the received blockchain transaction; and requesting user approval for the new auto-signing rule.

In some example embodiments of the fourth aspect, the proposal for a new auto-signing rule is built responsive to detecting that comparing attributes of the blockchain transaction and the conditions of the auto-signing rules results in a failure to find a matching auto-signing rule.

In some example embodiments of the fourth aspect, the computer program further comprises instructions for performing allowing the user of the user device to review and edit the auto-signing rules.

In some example embodiments of the fourth aspect, the computer program further comprises instructions for performing exporting auto-signing rules from the user device for use in other devices.

In some example embodiments of the fourth aspect, the computer program further comprises instructions for performing importing auto-signing rules to the user device.

In some example embodiments of the fourth aspect, the computer program further comprises instructions for performing logging auto-signing actions performed by the auto-signing rules engine.

In some example embodiments of the fourth aspect, the conditions comprise a domain where the blockchain transaction comes from.

In some example embodiments of the fourth aspect, the conditions comprise one or more of the following: type of the blockchain transaction, name of the smart contract, function of the smart contract, version of the smart contract, blockchain transaction category, smart contract title.

In some example embodiments of the fourth aspect, the user device is one of the following: a smart phone, a pad, a laptop, a personal computing device.

The computer program of the fourth example aspect may be stored in a non-transitory computer readable memory medium. The term non-transitory as used herein is a limitation of the medium itself (i.e. tangible, not a signal) as opposed to a limitation on data storage persistency (e.g. RAM vs. ROM).

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

The various means of the apparatus of the tenth, eleventh and/or twelfth example aspect may comprise a processor; and a memory including executable instructions that, when executed by the processor, cause the performance of the means.

Different non-binding example aspects and embodiments of the present invention have been illustrated in the foregoing. The embodiments in the foregoing are used merely to explain selected aspects or steps that may be utilized in implementations of the embodiment of the present disclosure. Some embodiments may be presented only with reference to certain example aspects. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 illustrates a system showing logical blocks according to some example embodiments;
2 and 3 are flow diagrams of methods according to some example embodiments; and
Fig. 4 shows a block diagram of an apparatus according to an example embodiment.

### DETAILED DESCRIPTON OF THE DRAWINGS

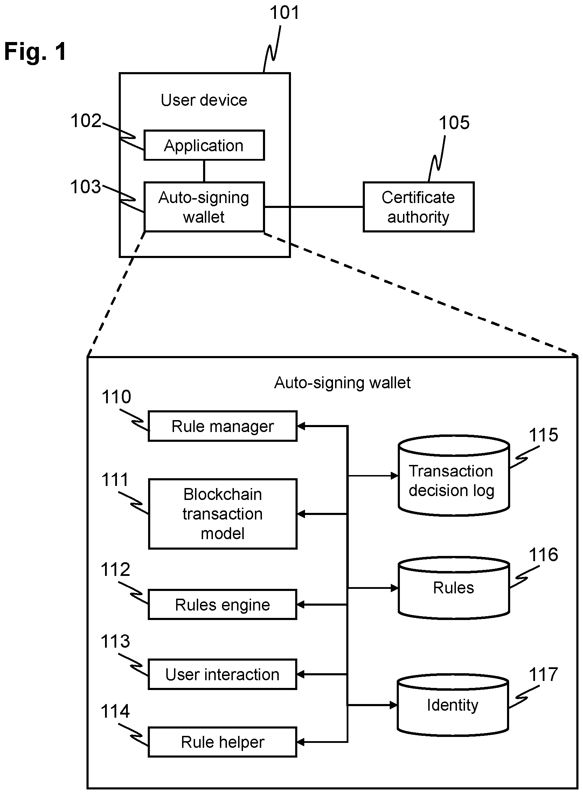

An example embodiment of the present disclosure and its potential advantages are understood by referring to Figs. 1 through 4 of the drawings. In this document, like reference signs denote like parts or steps.

Blockchain technology operates on the premise of distributed ledgers, which are decentralized databases that store data across multiple nodes or computers. The fundamental unit of data in a blockchain is a digitally signed transaction. A blockchain transaction may represent the exchange or alteration of assets, information, or ownership rights, for example.

Before a blockchain transaction can be added to the blockchain ledger, the transaction undergoes a digital signing process. This process involves a user, with a blockchain-based digital identity, digitally signing the transaction using cryptographic techniques. Digital signatures provide security, integrity, and authenticity to the transaction data, ensuring that the transaction cannot be tampered with or altered.

However, the digital signing process has certain drawbacks that can hinder the wider adoption and acceptance of blockchain technology. One significant challenge is the time-consuming nature of the process. Digital signing often involves complex cryptographic computations, which can be resource-intensive and time-consuming, especially when dealing with a large number of transactions. As a result, the overall transaction throughput and scalability of the blockchain network may be limited.

Furthermore, the method of digitally signing blockchain transactions may not be user-friendly. The process often requires users to have a deep understanding of cryptographic concepts and the technical aspects of blockchain technology. This technical complexity can discourage less tech-savvy individuals from participating in blockchain networks or using blockchain-based applications. The lack of user-friendly interfaces and intuitive processes can create barriers to entry and limit the mainstream adoption of blockchain technology.

Efficiency and user-friendliness of the blockchain signing process may be increased by using an auto-signing wallet that stores and automatically signs blockchain transactions on user's behalf. Such auto-signing solutions are often based on user delegating right to sign to a server application, which signs the blockchain transaction on the user's behalf. Further, the auto-signing solutions are often specifically crafted for a particular blockchain technology, and therefore not applicable in different setups and difficult to update.

Present disclosure provides improvements for the auto-signing procedures. The solutions of present disclosure provide an auto-signing wallet that uses dynamically updateable rules stored in the wallet for automatically deciding whether to sign a blockchain transaction on behalf of the user, to reject the blockchain transaction on behalf of the user, or to submit the blockchain transaction to the user to let the user decide on signing the blockchain transaction. The rules are blockchain platform agnostic and the solutions of various embodiments do not require interaction with the server side for performing the auto-signing. In this sense the solutions of present disclosure are less vulnerable than solutions that require sharing private key of the user to some external (trusted) system. Further, various embodiments of present disclosure do not require validation or agreement from other parties for the auto-signing process or rules. In this sense the solutions of present disclosure are less complex and less vulnerable than, for example, solutions where a contract and rules validated by different parties are defined for signing a blockchain smart contract.

Fig. 1 illustrates a system showing logical blocks according to some example embodiments. Fig. 1 shows a user device 101 and a certificate authority (CA) 105. The user device 101 comprises an application 102 that uses blockchain technology and an auto-signing wallet 103 that may be employed by the application 102 to automatically sign blockchain transactions in the user device 101. The certificate authority 105 is a trusted entity that issues digital certificates and private keys, which can be used to verify the authenticity and integrity of electronic communications and transactions. The certificate authority 105 acts as a trusted third party that verifies the identity of individuals, organizations, or devices. The certificate authority 105 is operable to provide a private key of a user of the user device 101 to the auto-signing wallet 103 for the purpose of signing blockchain transactions.

In operation, the application 102 may ask for a signature for a blockchain transaction from the auto-signing wallet 103. After processing the blockchain transaction, the auto-signing wallet 103 may return signed transaction digest or inform that signing was rejected.

In an embodiment, the auto-signing wallet 103 comprises the following logical blocks: a rule manager 110, a blockchain transaction model 111, a rules engine 112, a user interaction 113, a rule helper 114, a transaction decision log storage 115, a rules storage 116, and an identity storage 117.

In an embodiment, the system of Fig. 1 and the auto-signing wallet 103 may operate as follows.

Private keys issued by the certificate authority are stored in the identity storage 117 with an identity alias.

The rule manager 110 enables defining auto-signing rules for signing blockchain transactions. The rule manager may receive rule definitions from a user or rules may be imported from other devices or from other sources. The auto-signing rules define one or more conditions and a corresponding action. The conditions may concern one or more attributes of blockchain transactions such as the sender, the receiver, transaction details, wallet addresses, token balances. The rules may combine conditions using logical operators. The use of logical operators (e.g. AND, OR, NOT, XOR) allows creating complex rules by evaluating multiple conditions and determining the logical relationship between them. The rules may have a defined lifespan to allow for example auto-signing in the next hour only.

The rules are stored in the rules storage 116 for use by different logical blocks of the auto-signing wallet 103. The rules are stored in encrypted form. The encryption and decryption of the rules is done in the user device using a private key or a password of the user of the user device.

The specific data model and structure of blockchain transactions may vary significantly between different blockchain technologies. The blockchain transaction model 111 block collects the definition of the blockchain transactions. The blockchain transaction model 111 is used for processing blockchain transactions and for decoding blockchain transactions to extract attributes from the blockchain transactions as defined in the blockchain transaction model. Blockchain transaction models may be defined by the user of the user device 101. Additionally or alternatively, new blockchain transaction models may be imported. There may be plurality of blockchain transaction models to support different blockchain technologies. Blockchain transaction models can also be exported for sharing with other users and other devices. The blockchain transaction model may be used also in connection with hinting in rules writing as well as validating rules by confirming that rule conditions exist in respective blockchain transaction model.

The rules engine 112 evaluates and executes the auto-signing rules in accordance with the attributes extracted from the blockchain transaction. This may result in signing the blockchain transaction by a private key stored in the identity storage 117, rejecting the blockchain transaction, or asking the user for their decision.

The user interaction block 113 generates an interaction with the user to allow the user to validate or reject the blockchain transaction. The user interaction block 113 may be operable to show the blockchain transaction to the user to provide the user sufficient information for the decision.

The rule helper 114 block may facilitate the creation of new rules based on the current attributes of the blockchain transaction.

The transaction decision log 115 is operable to store the blockchain transactions processed by the auto-signing wallet, the associated decision, and a device identifier. The logs may be exported to a server to allow for cross-devices logging.

Further there may be some functionality that checks consistency of the auto-signing rules with identities and verifies that e.g. certain identity alias defined the auto-signing rules exist in the identity storage 117. Such cross check may be used also by the rule helper 114.

Still further there may be some functionality that checks if the received blockchain transaction matches with an available blockchain transaction model before applying any rules on the blockchain transaction. In an embodiment, only rules associated with a matching blockchain transaction model are applied to the blockchain transaction. The blockchain transaction may be discarded or ignored if no matching model is found. Similar check may be applied to rules in the rule manager 110 to confirm proper formatting of incoming rules.

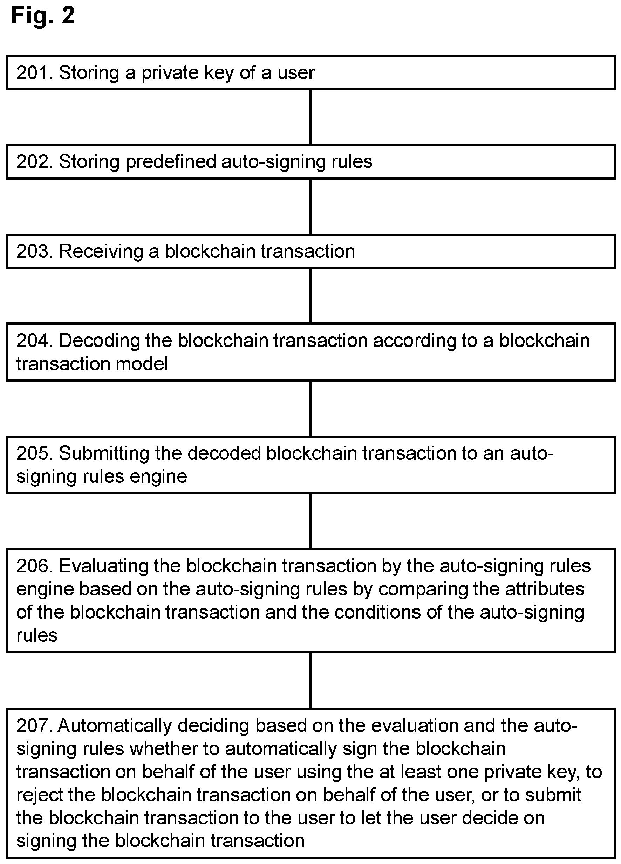

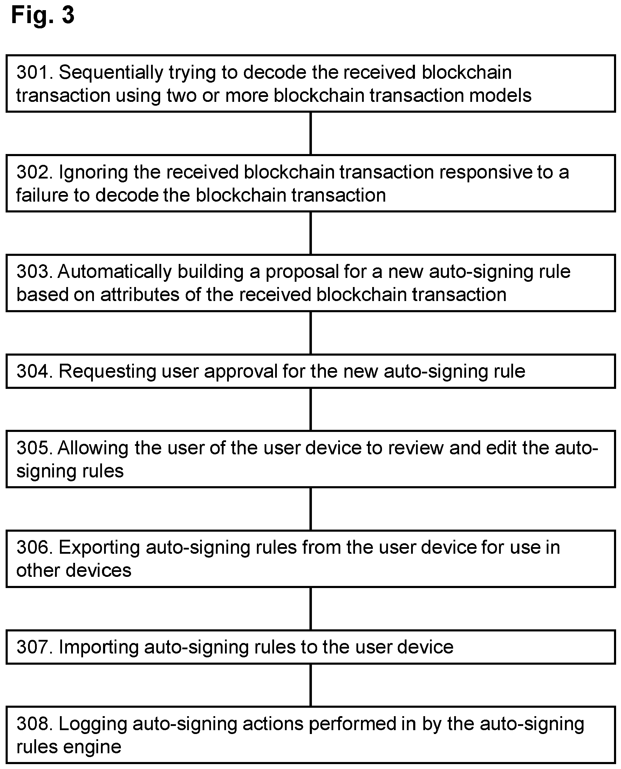

Figs. 2 and 3 are flow diagrams of methods according to some example embodiments. The methods may be performed in a user device, such as a smart phone, a pad, a laptop, a personal computing device, and implemented by one or more computer programs running in the user device, the computer programs comprising instructions for performing the steps of the respective method. One or more of the steps of the flow diagrams may be optional and the order of the steps may vary from the shown order.

The method of Fig. 2 comprises the following steps:
201. Storing in the user device at least one private key of a user of the user device.
202. Storing predefined auto-signing rules. The auto-signing rules define one or more conditions and a corresponding action. The condition may define attributes and attribute values that may be extracted from blockchain transactions. The action may provide instructions on how to sign a blockchain transaction that matches the respective conditions. The action may be for example to automatically sign the blockchain transaction on behalf of the user using the at least one private key, to reject the blockchain transaction on behalf of the user, or to submit the blockchain transaction to the user to let the user decide on signing the blockchain transaction.
203. Receiving a blockchain transaction.
204. Decoding the blockchain transaction according to a blockchain transaction model. The decoding extracts attributes of the blockchain transaction. There may be one blockchain transaction model or there may be two or more blockchain transaction models. The different blockchain transaction models may be related to different blockchain technologies such as Hyperledger Fabric, Ethereum etc. In this way, the same system may support multiple different blockchain technologies.

The auto-signing rules may be associated with or tied to a respective blockchain transaction model. Different blockchain transaction models may be associated with the same or similar auto-signing rules or with different auto-signing rules. Possible conditions of the auto-signing rules of one blockchain transaction model may be different from possible conditions of the auto-signing rules of another blockchain transaction model.

205. Submitting the decoded blockchain transaction to an auto-signing rules engine.

206. Evaluating the blockchain transaction by the auto-signing rules engine based on the auto-signing rules by comparing the attributes of the blockchain transaction and the conditions of the auto-signing rules with an aim to find an auto-signing rule that matches the blockchain transaction. The auto-signing rules that are used may be the auto-signing rules that are associated with the blockchain transaction model that was successfully used in step 204 to decode the blockchain transaction.

The conditions of the auto-signing rules and the attributes of the blockchain transaction may comprise for example a domain where the blockchain transaction comes from. Further examples of conditions/attributes include type of the blockchain transaction, name of the smart contract, function of the smart contract, version of the smart contract, blockchain transaction category, smart contract title, and any combination of these. The conditions of the auto-signing rules and the attributes of the blockchain transaction may be blockchain transaction model specific, but the same attribute/condition may be present in different blockchain transaction models. The attributes define what are the characteristic of each blockchain transaction.

207. Automatically deciding based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction. The decision may be defines as being based on the action of the auto-signing rule that matches the blockchain transaction, if such matching auto-signing rule is found.

The method of Fig. 3 comprises further optional steps:
301. Sequentially trying to decode the received blockchain transaction using available blockchain transaction models. For example, if there are two or more blockchain transaction models, a decoding attempt is first made with one of the blockchain transaction models and if that decoding attempt fails, a further decoding attempt is made with another blockchain transaction model until all available blockchain transaction model have been used.
302. Ignoring the received blockchain transaction responsive to a failure to decode the blockchain transaction. That is, if there is no applicable blockchain transaction model available, the method stops handling the blockchain transaction.
303. Automatically building a proposal for a new auto-signing rule based on attributes of the received blockchain transaction. The proposal for a new auto-signing rule may be built responsive to detecting that comparing attributes of the blockchain transaction and the conditions of the auto-signing rules results in a failure to find a matching auto-signing rule.
304. Requesting user approval for the new (automatically built) auto-signing rule. In this way, one achieves a user-friendly way to define new auto-signing rules. Further, the user is able to have control over the signing process and to either accept or reject proposed new rules.
305. Allowing the user of the user device to review and edit the auto-signing rules. In this way, the user is able to have further control over the signing process.
306. Exporting auto-signing rules from the user device for use in other devices. In this way, there is no need to redefine the auto-signing rules when the user wishes to use different devices. This may further improve user experience.
307. Importing auto-signing rules to the user device. In this way, it is possible to easily take into use rules that have been defined in some other device. This may further improve user experience.
308. Logging auto-signing actions performed by the auto-signing rules engine. In this way, it is possible to later find out which transactions have been automatically signed or rejected, for example.

In the following some non-limiting examples of auto-signing rules according to some embodiments of present disclosure are discussed. An auto-signing rule is composed of conditions and action. The action can be for example: "sign the transaction as Gerard", "sign the transaction as Bruno", "Reject the transaction", "Prompt me" (We can have multiple identities). The conditions may be based on the attributes of a blockchain transaction.

The attributes of a blockchain transaction may include one or more of the following: "type of transaction", "name of the smart contract", "function of the smart contract", "version of the smart contract".

A rule condition may also take into account the domain where the blockchain transaction comes from. E.g. FQDN (Fully Qualified Domain Name) may be defined in a rule condition.

A first example of an auto-signing rule may be defined as:
If "FQDN" equals "awebsite.com"
AND "type of transaction" equals "READ"
Then
"sign the transaction as Bruno".

A second example of an auto-signing rule may be defined as:
If "FQDN" equals "nokia.com"
AND "type of transaction" equals "READ"
AND "name of the smart contract" equals "catalog"
AND "function of the smart contract" equals "read_equipment_description"
AND "version" equals "2.0"
Then
"sign the transaction as Bruno".

A third example of an auto-signing rule may be defined as.
If "transaction category" equals "WRITE"
AND "smart contract title" equals "token_management"
AND "code operation" equals "transfer_token"
AND "receiver" equals "Ludo"
AND "amount" is less than "200"
AND currency equals "Euro"
Then
"sign the transaction as Gerard".

In this third example, a different blockchain transaction model is used compared to the first example. The attributes of the blockchain transaction ("transaction category", "smart contract title" ...) are different from the first example.

The following outlines an example of automatically building a proposal for a new auto-signing rule. Let's consider a scenario where a blockchain transaction with the following attributes is received:
FQDN: nokia.com
type of transaction: READ
function of the smart contract: read_equipment_description
date: 3/1/2024 15:02:32
version: 2.0

Based on this blockchain transaction, the following auto-signing rule proposal may be built:
if FQDN equals nokia.com
AND if type of transaction equals READ
AND if function of the smart contract equals read_equipment_description
THEN
automatically sign the transaction.

That is, the proposal may take some attributes of the received blockchain transaction and propose a rule that would automatically sign the transaction based on the selected attributes. In this example, some attributes of the received blockchain transaction, such as the date of the blockchain transaction, are ignored to build the proposal. The attributes that are taken into account in the proposal may be randomly chosen, or the most common attributes may be chosen or some other logic may be used.

The user may then accept or reject the proposed rule. That is, the user has the flexibility to make adjustments. The user may for example remove the condition "type of transaction equals READ" or alter a value in a condition, such as changing "FQDN equals nokia.fr."

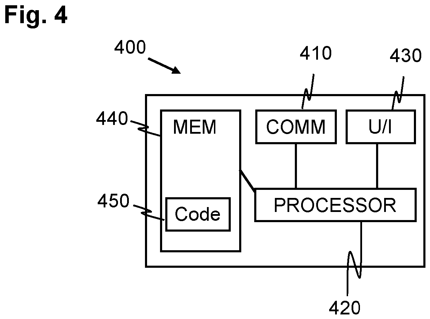

Fig. 4 shows a block diagram of an apparatus according to an example embodiment. The apparatus 400 may a smart phone, a pad, a laptop, a personal computing device. The apparatus 400 generally comprises a memory 440 including a computer program code 450. The apparatus 400 further comprises a processor 420 for controlling the operation of the apparatus 400 using the computer program code 450, and a communication unit 410 for communicating with other network entities and other devices. Further, the apparatus 400 may comprise a user interface unit 430.

The communication interface 410 may support IP based communications. The communication unit 410 may comprise, for example, one or more of: a local area network (LAN) unit, a wireless local area network (WLAN) unit; Bluetooth unit; cellular data communication unit; or satellite data communication unit. The communication interface 410 may support one or more different communication technologies. The apparatus 400 may also or alternatively comprise more than one of the communication interfaces 410. The processor 820 comprises, for example, any one or more of: a master control unit (MCU); a microprocessor; a digital signal processor (DSP); an application specific integrated circuit (ASIC); a field programmable gate array; and a microcontroller. The user interface unit 830 may comprise a circuitry for receiving input from a user of the apparatus 400, e.g., via a keyboard; graphical user interface of a display; speech recognition circuitry; or an accessory device; such as a headset; and for providing output to the user via, e.g., a graphical user interface or a loudspeaker. Various parts may be implemented using more than one corresponding or different elements, such as memories and storages may be multiplied for capacity and/or redundancy purposes. Similarly, processing and/or communications may be implemented with multiple parallel or elements for capacity and/or redundancy purposes.

The computer program code 450 may control the apparatus 800 to provide one or more example embodiments of present disclosure, such as those disclosed in connection with Figs. 1-3.

Without in any way limiting the scope, interpretation, or application of the claims appearing below, a technical effect of one or more of the example embodiments disclosed herein is a user-friendly solution for signing blockchain transactions. By improving the efficiency and user-friendliness of the digital signing process, it may be easier to achieve wider adoption of blockchain technology and pave the way for increased adoption of blockchain technology in various industries and applications.

As various embodiments operate on a set of explicit rules that are human-readable and understandable, it may be easy to interpret and explain the decision-making process by the users of blockchain technology.

A further technical effect is a flexible system as adding or modifying the auto-signing rules may be relatively straightforward, allowing for quick updates and adjustments e.g. responsive to changing requirements or need for new auto-signing rules. Further, the auto-signing rules may be designed to handle various scenarios and exceptions, providing more control over the decision-making process.

Yet a further technical effect is that the auto-signing rules of present disclosure may be effectively defined based on small amounts of data. By using explicit auto-signing rules massive amounts of training data is not needed the same way neural network or other artificial intelligence solutions would need.

Still further, a new auto-signing rule can be proposed from a single transaction already carried out.

Embodiments of the present disclosure may be implemented in software, hardware, application logic or a combination of software, hardware, and application logic. The software, application logic and/or hardware may reside e.g. on the first apparatus and/or the second apparatus of the foregoing disclosure. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 4. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of present disclosure are set out in the independent claims, other aspects may comprise other combinations of features from the described embodiments and/or the dependent claims with the features of the independent claims, and not solely the combinations explicitly set out in the claims.

It is also noted herein that while the foregoing describes example embodiments, these descriptions should not be viewed in a limiting sense. Rather, there are several variations and modifications which may be made without departing from the scope of the present disclosure as defined in the appended claims.

## Claims

1. A user device, comprising
means for storing at least one private key of a user of the user device and predefined auto-signing rules, wherein the auto-signing rules define one or more conditions and a corresponding action;
means for receiving a blockchain transaction;
means for decoding the blockchain transaction according to a blockchain transaction model to extract attributes of the blockchain transaction;
means for submitting the decoded blockchain transaction to an auto-signing rules engine;
means for evaluating the blockchain transaction by the auto-signing rules engine based on the auto-signing rules by comparing the attributes of the blockchain transaction and the conditions of the auto-signing rules; and
means for automatically deciding based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction.

2. The user device of claim 1, wherein the user device comprises two or more blockchain transaction models.

3. The user device of claim 2, further comprising means for sequentially trying to decode the received blockchain transaction using the two or more blockchain transaction models.

4. The user device of any preceding claim, wherein the auto-signing rules are associated with a respective blockchain transaction model.

5. The user device of any preceding claim, further comprising means for ignoring the received blockchain transaction responsive to a failure to decode the blockchain transaction.

6. The user device of any preceding claim, further comprising
means for automatically building a proposal for a new auto-signing rule based on attributes of the received blockchain transaction; and
means for requesting user approval for the new auto-signing rule.

7. The user device of claim 6, wherein the proposal for a new auto-signing rule is built responsive to detecting that comparing attributes of the blockchain transaction and the conditions of the auto-signing rules results in a failure to find a matching auto-signing rule.

8. The user device of any preceding claim, further comprising means for allowing the user of the user device to review and edit the auto-signing rules.

9. The user device of any preceding claim, further comprising means for exporting auto-signing rules from the user device for use in other devices.

10. The user device of any preceding claim, further comprising means for importing auto-signing rules to the user device.

11. The user device of any preceding claim, further comprising means for logging auto-signing actions performed by the auto-signing rules engine.

12. The user device of any preceding claim, wherein the conditions comprise a domain where the blockchain transaction comes from.

13. The user device of any preceding claim, wherein the conditions comprise one or more of the following: type of the blockchain transaction, name of the smart contract, function of the smart contract, version of the smart contract, blockchain transaction category, smart contract title.

14. The user device of any preceding claim, wherein the user device is one of the following: a smart phone, a pad, a laptop, a personal computing device.

15. A method in a user device, the method comprising:
storing at least one private key of a user of the user device and predefined auto-signing rules, wherein the auto-signing rules define one or more conditions and a corresponding action;
receiving a blockchain transaction;
decoding the blockchain transaction according to a blockchain transaction model to extract attributes of the blockchain transaction;
submitting the decoded blockchain transaction to an auto-signing rules engine;
evaluating the blockchain transaction by an auto-signing rules engine based on the auto-signing rules by comparing the attributes of the blockchain transaction and the conditions of the auto-signing rules; and
automatically deciding based on the evaluation and the auto-signing rules whether to automatically sign the blockchain transaction on behalf of the user using the at least one private key, to reject the blockchain transaction on behalf of the user, or to submit the blockchain transaction to the user to let the user decide on signing the blockchain transaction.
